# EUROPÄISCHE PATENTANMELDUNG

(11) **EP 4 190 885 A1**
(43) Veröffentlichungstag der Anmeldung: **07.06.2023**
(21) Anmeldenummer: 22000256.2
(22) Anmeldetag: 28.11.2022
(51) Int. Cl.: C11D 3/50, C11D 11/00, A01N 31/02, A01N 35/02, A01P 17/00

(54) **ERWEITERUNG VON OBERFLÄCHENPFLEGEPRODUKTEN ANHAND TIER ABWEISENDER REPELLENTS**

(30) Priorität: 01.12.2021 DE 202021003852 U
(71) Anmelder: Tobias, Geisler, 73230 Kirchheim unter Teck (DE); Schisslbauer, Martin, 92224 Amberg (DE)
(72) Erfinder: Tobias, Geisler, 73230 Kirchheim unter Teck (DE); Schisslbauer, Martin, 92224 Amberg (DE)

(57) **Zusammenfassung**

Die Erfindung betrifft eine Zusammensetzung mit einer der Pflege und/oder dem Schutz von lackierten, verchromten, zu lackierenden oder zu ölenden Oberflächen dienenden Komponente (a) und einem Repellent (b), sowie Verwendungen und Verfahren die Zusammenfassung betreffend.

## Beschreibung

Die vorliegende Erfindung betrifft eine Zusammensetzung mit einer der Pflege von Oberflächen dienenden Komponente und einem Repellent zum Fernhalten von Tieren, sowie entsprechende Verwendungen und Verfahren.

Um einem Verbiss von Leitungen eines Kraftwagens durch Marder zu verhindern, wurden im Stand der Technik verschiedene Maßnahmen vorgeschlagen und zum Teil kommerzialisiert. So gibt es Vorrichtungen mit Ultraschall, die für das menschliche Ohr unhörbare Töne hoher Frequenz ausstrahlen. Der Nachteil an derartigen Vorrichtungen ist, dass sie im Motorraum befestigt werden müssen und eine Energiequelle wie eine Autobatterie benötigen. Darüber hinaus ist ihre Anschaffung teuer. Eine weitere Möglichkeit, den Marder abzuschrecken, sind Vorrichtungen, die bei Berührung Stromschläge mit niedriger Stromstärke abgeben. Diese Vorrichtungen erfordern ebenfalls eine Energiequelle. Ferner müssen sie bei Arbeiten im Motorraum aus Sicherheitsgründen abgeschaltet werden. Eine weitere Variante ist das Auftragen von Giftstoffen auf die gefährdeten Schläuche im Motorraum. Der Nachteil dieser Variante ist, dass die Giftstoffe bei einer Motorwäsche mit dem Abwasser in die Kanalisation gespült werden.

Doch nicht nur durch Marder verursachte Leitungsschädigungen sind ein Ärgernis für PKW-Besitzer. Vielmehr hinterlassen Marder und Katzen Tatzenspuren auf Teilen der Karosserie, wenn sie über das Auto laufen. Dies muss nicht zwangsläufig lediglich ein ästhetisches Problem sein, sondern die Tatzen hinterlassen mitunter auch Lackkratzer.

Die vorliegende Erfindung hat es sich demgegenüber zur Aufgabe gemacht, ein Schutzmittel bereitzustellen, mit dem ein wirksames Fernhalten der Tiere erzielt wird und das ressourcenschonend ist. Insbesondere soll das Schutzmittel Katzen und andere Kleintiere von der Karossiere fernhalten und so Tierpfotenabdrücke und Kratzer auf der Karosserie vermeiden.

Diese Aufgabe wird gelöst durch den Gegenstand der beigefügten unabhängigen Ansprüche. Die abhängigen Ansprüche betreffen Weiterbildungen der Erfindung.

In einem ersten Aspekt wird die Aufgabe gelöst durch eine Zusammensetzung mit einer der Pflege, der Reinigung und/oder dem Schutz von lackierten Oberflächen, verchromten Oberflächen, zu lackierenden Oberflächen, Kunststoffoberflächen, Metalloberflächen oder Glasoberflächeneines Kraftfahrzeuges dienenden Basiskomponente (a) und mindestens einem Repellent (b), wobei das Repellent ein acyclischer Montoterpen-Allylalkohol und/oder oder ein Keton mit einer nicht endständigen Carbonylgruppe als funktionelle Gruppe ist/sind. Ferner ist Teil der Offenbarung eine Zusammensetzung mit einer der Pflege und/oder dem Schutz von lackierten, zu lackierenden, verchromten, zu verchromenden oder zu ölenden Oberflächen dienenden Basiskomponente (a) und einem Repellent (hier auch als Komponente (b) bezeichnet).

Der Ausdruck "einer der Pflege, der Reinigung und/oder dem Schutz von... Oberflächen dienenden Basiskomponente" (hier auch kurz Basiskomponente (a) bezeichnet) bezeichnet eine Komponente, durch die das Erscheinungsbild einer Oberfläche verbessert wird und/oder durch die eine Oberfläche geschützt wird, bspw. widerstandfähiger gegen Umwelteinflüsse, Schmutz und/oder Korrosion gemacht wird. Insbesondere handelt es sich um eine Komponente, die nach dem Auftragen zumindest zeitweise und zumindest teilweise die Oberfläche konserviert bzw. versiegelt. Die Basiskomponente (a) kann in derer Zusammensetzung beispielsweise herkömmlichen Außenautopflegeprodukten wie Autopolituren, Autowachsen, Autolacken, Autoshampoos, Detailer, Motorreiniger oder sog. Finisher, oder Holzpflegeprodukten wie Holzölen oder Holzschutzmitteln entsprechen. Besonders bevorzugt sind Außenautopflegeprodukte mit konservierenden Eigenschaften/Substanzen, d.h. Außenautopflegeprodukte die vorübergehend die Oberfläche konservieren, d.h. für einen gewissen Zeitraum eine kohärente Konservierungsschicht auf der Oberfläche bilden. Hierzu kann die Basiskomponente (a) Wachs oder wachsartige Bestandteile oder Fett oder fettartige Substanzen (bspw. Schafswollfett/Lanolin) als Konservierungsschicht bildende Substanz umfassen.

Ein "Repellent" im Sinne der vorliegenden Erfindung ist eine Substanz oder eine Mischung von Substanzen, die einen für Tiere, insbesondere für Marder, Hunde und Katzen, unangenehmen Geruchs- und/oder Geschmackseindruck hervorrufen und sich so zum Fernhalten der Tiere eignen.

Die vorliegende Erfindung vereinigt zwei Funktionen in einer besonders vorteilhaften Art und Weise. Wie sich in Versuchen der Erfinder herausstellte hat einerseits die Anwesenheit des Repellents keine nachteiligen Auswirkungen auf die Pflege, Reinigung oder den Schutz von Oberflächen, die mit der Basiskomponente (a) bezweckt wird. Andererseits stellte sich heraus, dass das Repellent (b) nach dessen Auftrag im Rahmen der erfindungsgemäßen Zusammensetzung mehrere Wochen aktiv war und gute Regenresistenz aufwies. Es wird angenommen, dass die Basiskomponente (a) mit konservierenden Eigenschaften einen Schutzfilm bildet, in dem das Repellent konserviert wird und so einem schnellen Abwaschen entgegenwirkt. Trotz dieser konservierenden Eigenschaft entfaltete das Repellent eine stark abweisende Wirkung. Dies war überraschend, da man eigentlich erwartet hätte, dass mit zunehmender Konservierung der Komponente (b) die Repellentwirkung nachlässt. Vorteilhafterweise deckt sich die mehrere Wochen anhaltende Aktivität des Repellents mit der Häufigkeit, mit der ein Privatwagen in Deutschland im Schnitt gewaschen wird (alle 6 bis 8 Wochen). Wird die Behandlung des PKWs mit der erfindungsgemäßen Zusammensetzung in das Waschprogramm integriert, wird regelmäßig die Schutzwirkung gegen Tiere erneuert und die Schutzwirkung permanent aufrechterhalten.

Auch wenn die Basiskomponente (b) keine konservierenden Substanzen wie bspw. eine Politur umfassen, wurden ähnliche Beobachtungen hinsichtlich der Langzeitwirkung gemacht. Auch dies war nicht zu erwarten, da nach dem Polieren die Politur vollständig heruntergewaschen wird. Folglich wäre anzunehmen gewesen, dass dadurch auch das Repellent entfernt wird. Diesem war nicht so. Das Repellent entfaltete noch über einen langen Zeitraum seine Wirkung.

Schließlich ergibt sich als weiterer Vorteil, dass durch die Integration des Repellents in der Basiskomponente (a) separate Produkte überflüssig sind. Entsprechend können Kosten und Verpackungsmaterial eingespart werden.

In einer bevorzugten Ausführungsform der Erfindung ist die Basiskomponente (a) und/oder das Repellent (b) dergestalt ist, dass sie bzw. es wenigstens vorübergehend auf der Oberfläche persistiert. Bspw. kann die Basiskomponente (a) und/oder das Repellent (b) wenigstens 1 Tag, wenigstens 2 Tage, wenigstens 3 Tage, wenigstens 4 Tage, wenigstens 5 Tage, wenigstens 6 Tage, wenigstens 1 Woche, wenigstens 2 Wochen, wenigstens 3 Wochen, wenigstens 4 Wochen oder wenigstens 5 Wochen auf der Oberfläche persistieren, jeweils bestimmt bei 20 °C und Trockenheit.

In einer bevorzugten Ausführungsform ist die Basiskomponente (a) ausgewählt aus der Gruppe bestehend aus Polituren, Wachsen, Lacken, Ölen, Detailern, Motorreiigern und Shampoos, aber auch aus der Gruppe derHolzöle und Holzschutzmittel.

Dem Fachmann ist wohlbekannt, dass die wesentlichen Inhaltsstoffe einer Politur Polierkörner sind, die in einer Paste verteilt sind. Durch verreiben der Politur auf einer Oberfläche werden geringe Mengen Material abgetragen, wodurch die Oberfläche geglättet und dadurch dessen Erscheinungsbild verbessert wird. Ein Wachs (auch Wax) überzieht die (vorzugsweise lackierte) Oberfläche mit einer farblosen Schutzschicht und schützt diese somit vor umweltbedingten Verschmutzungen. Der durch das aufgetragene Wachs entstandene Schutzfilm kann einen Langzeitschutz von bis zu mehreren Monaten bieten. Die Schutzwirkung des Wachses hängt dabei maßgeblich von der aufgetragenen Wachsmenge und Häufigkeit der Anwendung ab. Beim Lack kann es sich um Basislack, d.h. um die farbgebende Schicht, oder um Klarlack, der den Basislack schützt, handeln.

In einer weiteren Ausgestaltung der Erfindung ist das Repellent (b) ausgewählt ist aus der Gruppe bestehend aus Methylnonylketon, 2,6-Dimethyl-trans-2,6-octadien-8-ol, ätherisches Ölen wie Menthol, Lavendel, Rosmarin, Pfefferminze, Eukalyptus, Zitrone, Gewürzstoffen wie Chilli- oder Pfefferkörner, oder Mischungen davon, wobei das Repellent (b) vorzugsweise Methylnonylketon und optional 2,6-Dimethyl-trans-2,6-octadien-8-ol umfasst oder daraus besteht.

Die Vorteile von ätherischen Ölen und Gewürzstoffen sind deren Unbedenklichkeit für die Gesundheit und die Umwelt. Methylnonylketon ist aufgrund dessen hoher Wirksamkeit und guter Kompatibilität mit der Basiskomponente (a) bevorzugt.

In einer weiteren Ausführungsform der Erfindung beträgt der Gewichtsanteil des Repellents (b), vorzugsweise Methylnonylketon und optional 2,6-Dimethyl-trans-2,6-octadien-8-ol, 0,001 bis 10 %, bevorzugt 0,01 bis 5 %, weiter bevorzugt 0,5 bis 2 %, am meisten bevorzugt 0,1 bis 2 %, jeweils bezogen auf das Gesamtgewicht der Zusammensetzung, betragen.

Eine weitere Ausführungsform sieht vor, dass die Basiskomponente (a) ein oder mehr Substanzen umfasst, die ausgewählt sind aus der Gruppe bestehend aus Lösungsmitteln; Duftstoffen; Lösungsvermittlern; Kupplungsagenzien; Emulgatoren, vorzugsweise Sulfobernsteinsäuredioctylestern oder Salzen davon und/oder ethoxylierten Tensiden, insbesondere Isotridecanol mit 5 bis 14 EO; Tensiden; Reinigungsverstärkern; Glanzverstärkern; Mitteln zur verzögerten Abgabe des Repellents; Mitteln zur Bindung des Repellents an die Oberfläche, vorzugsweise eine wässrige Wachsemulsion, insbesondere Karnaubawachs, Aminosiloxan und/oder Siliziumharz; Mitteln zur Bindung, Glättung, Hydrophobisierung und/oder Stärkung der Oberfläche, vorzugsweise Aminosiloxan, Siliziumharz und/oder Siliziumquat; und Mitteln zur Schichtbildung.

Eine besonders bevorzugte Zusammensetzung umfasst Methylnonylketon, 2,6-Dimethyl-trans-2,6-octadien-8-ol, Sulfobernsteinsäuredioctylester oder ein Salz davon, insbesondere Sulfobernsteinsäuredioctylester Natriumsalz und Siliziumquat.

Es ist auch möglich, eine erfindungsgemäße Zusammensetzung herzustellen, indem ein herkömmliches der Pflege, der Reinigung und/oder dem Schutz von lackierten Oberflächen, verchromten Oberflächen, zu lackierenden Oberflächen, Kunststoffoberflächen, Metalloberflächen oder Glasoberflächen wie eine Autopolitur, ein Autowachs, ein Autolack, ein Shampoo, ein Detailer oder ein Motorraumreiniger, oder ein Holzöl oder ein Holzschutzmittel (Basiskomponente (a)) mit einem herkömmlichen Mittel zum Fernhalten von Tieren, insbesondere Mardern, Hunden und Katzen, d.h. einem Mittel enthaltend das Repellent (b), gemischt wird. In diesem Fall ist es bevorzugt, dass der Gewichtsanteil der Basiskomponente (a) 40 bis 95 %, bevorzugt 60 bis 90 %, bezogen auf das Gesamtgewicht der Zusammensetzung, beträgt. Des weiteren ist bevorzugt, dass der Gewichtsanteil des Mittels enthaltend das Repellent (b) 5 bis 60 %, bevorzugt 10 bis 40 %, bezogen auf das Gesamtgewicht der Zusammensetzung, beträgt.

Entsprechend stellt ein weiterer Aspekt der vorliegenden Erfindung ein Verfahren zur Herstellung der erfindungsgemäßen Zusammensetzung dar. Das Verfahren umfasst die folgenden Schritte:
(i) Bereitstellen einer der Pflege, der Reinigung und/oder dem Schutz von lackierten Oberflächen, verchromten Oberflächen, zu lackierenden Oberflächen, Kunststoffoberflächen, Metalloberflächen oder Glasoberflächen eines Kraftfahrzeuges dienenden Basiskomponente (a) (wie hier näher spezifiziert);
(ii) Bereitstellen wenigstens eines Repellents (b) oder eines Mittels enthaltend das Repellent (b) (wie hier näher spezifiziert); und
(iii) Mischen der Basiskomponente (a) mit dem Repellent (b) oder dem Mittel enthaltend das Repellent (b).

Ein weiterer Aspekt der vorliegenden Erfindung betrifft die Verwendung der erfindungsgemäßen Zusammensetzung zur Oberflächenpflege, zum Oberflächenschutz und/oder als Repellent zum Fernhalten von Tieren, insbesondere Mardern, Hunden und Katzen.

Ein Verfahren zur Oberflächenpflege, zur Oberflächenreinigung, zum Oberflächenschutz und/oder zum Fernhalten von Tieren, insbesondere Mardern, Hunden und Katzen von einem Kraftfahrzeug, stellt einen weiteren Aspekt der Erfindung dar. Das Verfahren umfasst das Auftragen der erfindungsgemäßen Zusammensetzung auf eine Oberfläche eines Kraftfahrzeuges.

Ein alternatives Verfahren zur Oberflächenpflege, zum Oberflächenschutz und/oder zum Fernhalten von Tieren, insbesondere Mardern, Hunden und Katzen, umfasst die folgenden Schritte:
(i) Auftragen eines Repellents (b) oder eines Mittels enthaltend das Repellent (b) (wie hier näher spezifiziert) auf eine lackierte Oberfläche, verchromte Oberfläche, zu lackierende Oberfläche, Kunststoffoberfläche, Metalloberfläche oder Glasoberfläche;
(ii) Auftragen einer der Pflege und/oder dem Schutz der Oberfläche dienenden Basiskomponente (a) (wie hier näher spezifiziert) auf die mit dem Repellent (b) behandelte Oberfläche.

In einer bevorzugten Ausgestaltung der erfindungsgemäßen Verwendung bzw. des erfindungsgemäßen Verfahrens dient die Zusammensetzung zur Behandlung einer Oberfläche eines Kraftfahrzeuges. In anderen Ausführungsformen wird die Zusammensetzung zur Behandlung der Oberfläche eines Außenmöbels, eines Spielplatzgerätes, eines Fahrgeschäftes, eines Mobilheimes oder eines Wohnwagens eingesetzt. Spielplatzgeräte bezeichnen alle für die Nutzung im Freien vorgesehene Spielgeräte, unabhängig davon, ob sie sich auf einem öffentlichen Spielplatz, in einer Kinderbetreuungseinrichtung oder in einem Privatgarten befinden. Beispiele für entsprechende Oberflächen sind Sandkastenumkleidungen (i.V.m. Holzpflegeprodukten), Rutschen (Metall oder Kunststoff), Hüpfburgen etc. Mit Fahrgeschäften sind beispielsweise Karusselle und Achterbahnen gemeint. Insbesondere wird die Behandlung einer Oberfläche, die der Witterung ausgesetzt ist, ins Auge gefasst.

Eine spezifische Ausführungsform stellt einen Detailer mit den nachfolgenden Bestandteilen dar (Prozentangaben jeweils bezogen auf das Gesamtgewicht der Zusammensetzung):
(1) 2-Propanol, vorzugsweise zu 2 bis 5 Gew.-%,
(2) 2-Undecanon, vorzugsweise zu 0,5 bis 1 Gew.-%,
(3) 2,6-Dimethyl-trans-2,6-octadien-8-ol, vorzugsweise zu 0,5 bis 1 Gew.-%,
(4) Sulfobernsteinsäuredioctylester, Natriumsalz, vorzugsweise zu 1 bis 3 Gew.-%,
(5) Isotridecanol, ethoxyliert (5 -14 EO), vorzugsweise zu 0,25 bis 1 Gew.-%,
(6) Karnaubawachs, vorzugsweise zu 0,1 bis 1 Gew.-%,
(7) Aminosiloxan, vorzugsweise zu 1 bis 3 Gew.-%,
(8) Harz eines Silizium-Derivats, vorzugsweise zu 0,1 bis 1 Gew.-%,
(9) Silizium-Quat, vorzugsweise zu 0,1 bis 1 Gew.-%.

Die Bestandteile (1) bis (9) haben in der erfindungsgemäßen die nachfolgenden Funktion(en):
(1) Lösungsmittel,
(2) Repellent; Duftstoff,
(3) Repellent,
(4) Lösungsvermittler und Kupplungsagent sowie Emulgator,
(5) Tensid; Reinigungsverstärkung und Emulgator für Repellent (1) und (2),
(6) Glanzverstärker und Hilfsagent zur verzögerten Abgabe von Repellent (1) und (2),
(7) Erzeugt die Verbindung zur Oberläche; macht die Oberläche glatt; macht die Oberfläche hydrophob,
(8) Verbesserte Schichtbildung; verzögerte Abgabe von Repellent (1) und (2); verbesserte Beständigkeit gegenüber Detergenzien,
(9) Das verwendete Siliziumquat, chemisch ein quaternär modifiziertes Siliziumöl, weist enständige Stickstoffatome auf, die quaterniert sind. Somit ergibt sich eine ausgesprochen gute Affinität zu festen Oberflächen (Lack, Glas) bei gleichzeitiger Bindung der repellenten Wirkstoffe (1) und (2)._Das Siliziumquat zeichnet sich dadurch aus, dass es einen Stickstoffgehalt von (N+) 0,2 bis 0,5 % hat.

Eine weitere spezifische Ausführungsform stellt einen Motorraumreiniger mit den nachfolgenden Bestandteilen dar (Prozentangaben jeweils bezogen auf das Gesamtgewicht der Zusammensetzung):
(1) 2-Propylheptanolethoxylat, bevorzugt zu 1 bis 5 Gew.-%,
(2) Quartäres C12-14 alkylmethylaminethoxylatmethylchlorid, bevorzugt zu 1 bis 5 Gew.-%,
(3) 2-Undecanon, bevorzugt zu 0,5 bis 1 Gew.-%,
(4) 2,6-Dimethyl-trans-2,6-octadien-8-ol, bevorzugt zu 0,5 bis 1 Gew.-%,
(5) Sulfobernsteinsäuredioctylester, Natriumsalz, bevorzugt zu 1 bis 3 Gew.-%,
(6) Siliziumquat, bevorzugt zu 0,1 bis 1 Gew.-%.

In der erfindungsgemäßen Zusammensetzung weisen die Bestandteile (1) bis (6) die nachfolgenden Funktion(en) auf:
(1) Tensid - Reinigung
(2) Kationisches Tensid; Emulgierung, Schaum- und Netzbildung
(3) Repellent
(4) Repellent
(5) Emulgator für Repellent (3 ) und (4)
(6) Das verwendete Siliziumquat, chemisch ein quaternär modifiziertes Siliziumöl, weist enständige Stickstoffatome auf, die quaterniert sind. Somit ergibt sich eine ausgesprochen gute Affinität zu festen Oberflächen (Lack, Glas) bei gleichzeitiger Bindung der repellenten Wirkstoffe (3) und (4).Das Siliziumquat zeichnet sich dadurch aus, dass es einen Stickstoffgehalt von (N+) 0,2 bis 0,5 % hat.

Eine weitere spezifische Ausführungsform stellt ein Shampoo mit den nachfolgenden Bestandteilen dar (Prozentangaben jeweils bezogen auf das Gesamtgewicht der Zusammensetzung):
(1) 2-Propylheptanolethoxylat, bevorzugt zu 5 bis 10 Gew.-%,
(2) 2-Propanol; Isopropylalkohol, bevorzugt zu 5 bis 10 Gew.-%,
(3) 2-Undecanon, bevorzugt zu 0,5 bis 1 Gew.-%,
(4) Di(hydrierter Talg)dimethylammoniumchlorid, bevorzugt zu 1 bis 5 Gew.-%,
(5) 2,6-Dimethyl-trans-2,6-octadien-8-ol, bevorzugt zu 0,5 bis 1 Gew.-%,
(6) Sulfobernsteinsäuredioctylester, Natriumsalz, bevorzugt zu 1 bis 3 Gew.-%,
(7) Terpenkohlenwasserstoffe, bevorzugt zu 0,1 bis 1 Gew.-%,
(8) Siliziumquat, bevorzugt zu 0,1 bis 1 Gew.-%.

Die einzelnen Bestandteile haben die folgenden Funktion(en):
(1) Tensid - Reinigung
(2) Lösungsmittel / Lösungsvermittler
(3) Repellent
(4) Kationisches Tensid; Emulgierung, Schaum- und Netzbildung
(5) Repellent
(6) Emulgator für Repellent (3) und (5)
(7) Lösungsmittel; zusätzlich als Pheromon/Duftstoff - Repellent-Hilfsmittel
(8) Das verwendete Silikonquat, chemisch ein quaternär modifiziertes Siliziumöl, weist enständige Stickstoffatome auf, die quaterniert sind. Somit ergibt sich eine ausgesprochen gute Affinität zu festen Oberflächen (Lack, Glas) bei gleichzeitiger Bindung der repellenten Wirkstoffe (3) und (5).Das Siliziumquat zeichnet sich dadurch aus, dass es einen Stickstoffgehalt von (N+) 0,2 bis 0,5 % hat.Nachfolgend wir die vorliegende Erfindung anhand von Beispielen näher erläutert. Die Beispiele betreffen spezifische und/oder bevorzugte Ausführungsformen und sind demnach nicht als einschränkend zu verstehen.

### 1. Mischversuche - Beschreibung der Mischreihe

**a)** Basiskomponenten:
   <5%, Trennmittel, vollenthärtetes Wasser, 2-Undecanon
**b)** Mischung über einfaches Vermischen in Sprüh-Applizier Flasche und Handschütteln
**c)** Beobachtung von Trennverhalten oder ähnlichen Störprozessen; keine Auffälligkeiten
**d)** Applikationsfähigkeit des Gemischs blieb gewährleistet

### 2. Testreihe über Lackverträglichkeit

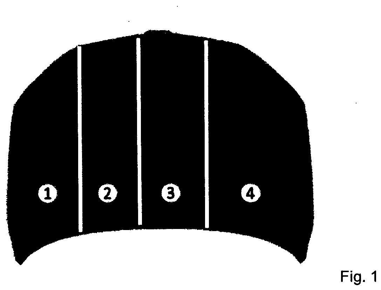

**a)** Testdauer: 4 Monate
**b)** Testumgebung:
   - Außenbereich
   - Horizontale Ausrichtung der KfZ-Motorhaube in 1m Bodenhöhe
**c)** Applikation des Gemischs auf marktübliche KfZ-Motorhaube
**d)** Einteilung der Motorhaube in 4 Bereiche (vgl. Fig. 1)
   - ***Bereich 1*:** Applikation des Gemischs *wöchentlich*
   - ***Bereich 2:*** Applikation des Gemischs *wöchentlich* mit erhöhtem Anteil von 2-Undecanon
   - ***Bereich 3:*** Applikation des Vergleichsproduktes *wöchentlich* (marktübliches KfZ-Lackpflegeprodukt)
   - ***Bereich 4:*** Keine Applikation - Fläche dient zum optischen Vergleich

### 3. Langzeitwirkung - Analyse der Testreihe

**a) Langzeitwirkung Lack**
   - Eine deutliche optische Verbesserung wurde in den Bereichen 1-3 festgestellt, während Bereich 4 sich aufgrund der Wettereinwirkungen während des Versuchs optisch verschlechterte.
   - Die Verbesserung der Oberflächenoptik war in den Bereichen 1-3 identisch.
   - Nach Ende des Versuchs blieben die Bereiche 1-3 unverändert zueinander in deren optischer Qualität.
   - Die Langzeitverträglichkeit von einem Gemisch ist daher in dieser Versuchsreihe bestätigt*.
   - (*Anmerkung: Die Gesamtdauer des Versuchs war auf 4 Monate begrenzt.)
   - (*Anmerkung: Die Konzentration von 2-Undecanon und anderen als Repellent wirkenden Stoffe und Stoffgruppen kann optimiert werden.)
**b) Langzeitwirkung Repellent**

- Nachweisführung: **Beobachtung der abstoßenden Wirkung der behandelten Oberfläche auf Katzen**
- Messungswiederholungsrate: Im 3 Tage Rhythmus wird die Wirkung auf Katzen beurteilt.
- Ergebnis: Starke Wirkung auf Tiere in den Bereichen 1-2. Ein erhöhter residualer Anteil von abschreckenden Geruchskomponenten ist wahrscheinlich.
- Größte Wirkung in Bereich 2. Wahrscheinlich verbleibt das Repellent in Bereich 2 im größten Maße und am längsten.
- Wirkung (Menge des Repellents) nimmt mit Menge des Mischverhältnisses zu.
- Über die Zeit scheint die Wirkung auf die Katzen nachzulassen, scheint aber über mehrere Tage ausreichend hoch. (Initialer) Verflüchtigungseffekt des Repellents möglich; evtl. handelt es sich bei den verflüchtigenden Anteilen um oberflächennahe Anteile. Die Langzeitwirkung bleibt bestehen (bei Applikation im 1-Wochen Rhythmus).
- Bei wöchentlichem Auftrag ist eine ausreichende Wirkung gegeben (= stetiger Anteil des Repellents).

## Patentansprüche

1. Zusammensetzung mit einer der Pflege, der Reinigung und/oder dem Schutz von lackierten Oberflächen, verchromten Oberflächen, zu lackierenden Oberflächen, Kunststoffoberflächen, Metalloberflächen oder Glasoberflächeneines Kraftfahrzeuges dienenden Basiskomponente (a) und mindestens einem Repellent (b), wobei das Repellent ein acyclischer Montoterpen-Allylalkohol und/oder oder ein Keton mit einer nicht endständigen Carbonylgruppe als funktionelle Gruppe ist/sind.

2. Zusammensetzung nach Anspruch 1, wobei die Basiskomponente (a) und/oder das Repellent (b) dergestalt ist, dass sie bzw. es wenigstens vorübergehend auf der Oberfläche persistiert.

3. Zusammensetzung nach Anspruch 1 oder 2, wobei die Basiskomponente (a) ausgewählt ist aus der Gruppe bestehend aus Polituren, Wachsen, Lacken, Ölen, Detailern, Motorraumreinigern und Shampoos.

4. Zusammensetzung nach einem der vorangehenden Ansprüche, wobei das Repellent (b) ausgewählt ist aus der Gruppe bestehend aus Methylnonylketon, 2,6-Dimethyl-trans-2,6-octadien-8-ol, ätherische Ölen wie Menthol, Lavendel, Rosmarin, Pfefferminze, Eukalyptus, Zitrone, Gewürzstoffen wie Chilli- oder Pfefferkörner und Mischungen davon, wobei das Repellent (b) vorzugsweise Methylnonylketon und optional 2,6-Dimethyl-trans-2,6-octadien-8-ol umfasst, oder daraus besteht.

5. Zusammensetzung nach einem der vorangehenden Ansprüche, wobei der Gewichtsanteil des Repellents (b), vorzugsweise Methylnonylketon und optional 2,6-Dimethyl-trans-2,6-octadien-8-ol, 0,01 bis 5 %, bevorzugt 0,5 bis 2 %, weiter bevorzugt 0,1 bis 1 %, bezogen auf das Gesamtgewicht der Zusammensetzung, beträgt.

6. Zusammensetzung nach einem der vorangehenden Ansprüche, wobei die Basiskomponente (a) ein oder mehr Substanzen umfasst, die ausgewählt sind aus der Gruppe bestehend aus Lösungsmitteln; Duftstoffen; Lösungsvermittlern; Kupplungsagenzien; Emulgatoren, vorzugsweise Sulfobernsteinsäuredioctylestern oder Salzen davon und/oder ethoxylierten Tensiden, insbesondere Isotridecanol mit 5 bis 14 EO; Tensiden; Reinigungsverstärkern; Glanzverstärkern; Mitteln zur verzögerten Abgabe des Repellents; Mitteln zur Bindung des Repellents an die Oberfläche, vorzugsweise eine wässrige Wachsemulsion, insbesondere Karnaubawachs, Aminosiloxan und/oder Siliziumharz; Mitteln zur Bindung, Glättung, Hydrophobisierung und/oder Stärkung der Oberfläche, vorzugsweise Aminosiloxan, Siliziumharz und/oder Siliziumquat; und Mitteln zur Schichtbildung.

7. Zusammensetzung nach einem der vorangehenden Ansprüche umfassend Methylnonylketon, 2,6-Dimethyl-trans-2,6-octadien-8-ol, Sulfobernsteinsäuredioctylester oder ein Salz davon, und Siliziumquat.

8. Verwendung einer Zusammensetzung wie in einem der Ansprüche 1 bis 7 definiert zur Oberflächenpflege, zur Oberflächenreinigung, zum Oberflächenschutz und/oder als Repellent zum Fernhalten von Tieren, insbesondere Mardern, Hunden und Katzen, von einem Kraftfahrzeug.

9. Verwendung einer Zusammensetzung wie in einem der Ansprüche 1 bis 7 definiert zur Oberflächenpflege, zum Oberflächenschutz und/oder als Repellent zum Fernhalten von Tieren, insbesondere Mardern, Hunden und Katzen, von einem Außenmöbel, einem Spielplatzgerät, einem Fahrgeschäft, einem Mobilheim oder einem Wohnwagen dient.

10. Verfahren zur Herstellung einer Zusammensetzung nach einem der Ansprüche 1 bis 7 mit den Schritten:
Bereitstellen einer der Pflege, der Reinigung und/oder dem Schutz von lackierten Oberflächen, verchromten Oberflächen, zu lackierenden Oberflächen, Kunststoffoberflächen, Metalloberflächen oder Glasoberflächen eines Kraftfahrzeuges dienenden Basiskomponente (a);
Bereitstellen wenigstens eines Repellents (b), vorzugsweise Methylnonylketon und optional 2,6-Dimethyl-trans-2,6-octadien-8-ol, oder eines Mittels enthaltend das Repellent (b); und
Mischen der Basiskomponente (a) mit dem Repellent (b) oder dem Mittel enthaltend das Repellent (b).

11. Verfahren zur Pflege, zur Reinigung und/oder zum Schutz von lackierten Oberflächen, verchromten Oberflächen, zu lackierenden Oberflächen, Kunststoffoberflächen, Metalloberflächen oder Glasoberflächen eines Kraftfahrzeuges, und/oder zum Fernhalten von Tieren, insbesondere Mardern, Hunden und Katzen, von einem Kraftfahrzeug, umfassend:
Bereitstellen einer Zusammensetzung wie in einem der Ansprüche 1 bis 7 definiert; und
Auftragen der Zusammensetzung auf eine Oberfläche des Kraftfahrzeuges.

12. Verfahren zur Pflege, zur Reinigung und/oder zum Schutz von lackierten Oberflächen, verchromten Oberflächen, zu lackierenden Oberflächen, Kunststoffoberflächen, Metalloberflächen oder Glasoberflächen eines Kraftfahrzeuges, und/oder zum Fernhalten von Tieren, insbesondere Mardern, Hunden und Katzen, von einem Kraftfahrzeug, umfassend:
Auftragen eines Repellents (b), vorzugsweise Methylnonylketon und optional 2,6-Dimethyl-trans-2,6-octadien-8-ol, oder eines Mittels enthaltend das Repellent (b) auf eine lackierte Oberfläche, verchromte Oberfläche, zu lackierende Oberfläche, Kunststoffoberfläche, Metalloberfläche oder Glasoberfläche;
Auftragen einer der Pflege und/oder dem Schutz der Oberfläche dienenden Basiskomponente (a) auf die mit dem Repellent (b) behandelte Oberfläche.
